Europäisches Patentamt

(19) European Patent Office
Office européen des brevets

(11) Publication number. **0 200 459**
**A2**

# (12) EUROPEAN PATENT APPLICATION

(21) Application number: 86303013.6

(22) Date of filing: 22.04.86

(51) Int. Cl.⁴: **B 23 P 19/06**
**B 25 B 29/02, F 16 J 15/16**

(30) Priority: 29.04.85 SE 8502059

(43) Date of publication of application:
05.11.86 Bulletin 86/45

(84) Designated Contracting States:
AT BE CH DE FR GB IT LI LU NL SE

(71) Applicant: HEDLEY PURVIS LIMITED
Unit 5 Coopies Field Coopies Lane Industrial Estate
Morpeth Northumberland NE61 6JU(GB)

(72) Inventor. Kidner, Kjell
Krokslattsparkgata 47
S-431 38 Molndal(SE)

(74) Representative: Gura, Henry Alan et al,
MEWBURN ELLIS & CO. 2/3 Cursitor Street
London EC4A 1BQ(GB)

(54) Fluid-actuated piston-cylinder assembly.

(57) A fluid-actuated piston-cylinder assembly, capable of incorporation in a bolt-tensioning device, comprises a cylinder (12) in which is slidably mounted a piston (14), the cylinder (12) and piston (14) each including an associated sealing member (20, 32) adapted to make sealing contact with the other of the piston (14) and cylinder (12). A fluid inlet (45) feeds a source of fluid under pressure between the sealing members (20, 32). The sealing member (20) of the cylinder (12) projects radially inwardly of the cylinder (12) to seal against an outer surface (30) of the piston (14), while the sealing member (32) of the piston (14) projects radially outwardly of the piston (14) to seal against an inner surface (18) of the cylinder (12) in such a manner that, on an increase in pressure of the source of fluid, the sealing members (20, 32) are radially deformed towards the associated surfaces (30, 18) to increase sealing contact therewith.

0200459

- 1 -

FLUID-ACTUATED PISTON-CYLINDER ASSEMBLY

The present invention relates to fluid-actuated piston-cylinder assemblies and has particular, though not exclusive, application to such assemblies for incorporation in bolt-tensioning devices.

In order to ensure that a nut on a bolt interconnecting two or more components is tightened to a desired degree, it is established practice to utilise a bolt-tensioning device to extend the bolt within its elastic limit and to screw the nut up to the associated abutment face of the component being tightened while the bolt is so tensioned such that, on release of pressure within the piston cylinder assembly, a secure connection is effected.

Such bolt-tensioning devices commonly incorporate a puller sleeve screwed onto the free end of the bolt, and a hydraulic or pneumatically operated piston-cylinder assembly the piston of which reacts between the components to be interconnected and the puller sleeve to stretch or tension the bolt.

The fluid pressures associated with such devices can be substantial and problems arise in ensuring an effective seal between the piston and cylinder of the assembly throughout its operating range and in particular under higher pressure conditions.

The fluid under pressure within the cylinder and acting on the piston, as well as serving to displace

- 2 -

the piston relative to the cylinder, also acts on the internal surface of the cylinder whereby said surface is urged outwardly such that the effective internal diameter of the cylinder is increased.

Thus the clearance between the inner surface of the cylinder and the outer surface of the piston is increased, and the sealing means between the piston and the cylinder are subjected to more severe operating conditions. In such situations it has been found that conventional annular sealing rings have a tendency to be extruded from their mountings within the piston whereby leakage occurs.

It has been attempted to overcome this problem by increasing the thickness of the cylinder wall with a view to reducing the degree of distortion thereof. However this results in a much heavier, more cumbersome and therefore more expensive assembly.

Alternative solutions have been to provide more complex annular sealing rings adapted to be able to take up the increased clearance between the piston and cylinder, but these have not proved totally satisfactory.

It would be desirable to be able to provide a fluid-actuated piston-cylinder assembly incorporating sealing means between the piston and the cylinder thereof capable of effectively withstanding the full range of

- 3 -

pressures applied thereto without any increase in the size of the assembly and without the necessity for using sealing rings of relatively complex configurations.

· According to the present invention there is provided a fluid-actuated piston-cylinder assembly comprising a piston slidably mounted in, for axial movement relative to, a cylinder, the piston including a sealing member adapted to make sealing contact with an inner surface of the cylinder, and the cylinder including a sealing member adapted to make sealing contact with an outer surface of the piston, and an inlet for a source of fluid under pressure feeding between said sealing members on the piston and cylinder, the sealing member on the piston_projecting radially outwardly of said piston and the sealing member on the cylinder projecting radially inwardly of said cylinder in such a manner that, on increase in pressure of said source of fluid, the sealing members on the piston and cylinder are radially deformed towards said inner surface of the cylinder and outer surface of the piston respectively to increase sealing contact therewith.

It will be appreciated that, with such an arrangement, the increase in fluid pressure serves to deform the sealing members of the piston and cylinder in such a manner that the sealing effects thereof are increased in accordance with said increase in fluid pressure.

- 4 -

Thus the distortion of the cylinder associated with increased operating pressure of the fluid, and which serves to increase the clearance between the co-operating surfaces of the piston and cylinder, is automatically compensated for by the deformation of the sealing members.

In a preferred assembly, the sealing member of the piston is integrally formed with said piston and the sealing member of the cylinder is integrally formed with said cylinder.

The sealing members conveniently include opposed surfaces thereon defining, together with the inner surface of the cylinder and the outer surface of the piston, a chamber into which the fluid inlet feeds.

In one embodiment of the invention said opposed surfaces of the sealing members include extents which are planar and parallel with one another and each extend at an acute angle, typically of the order of 20°, to the central longitudinal axis of the assembly.

In alternative embodiments, said opposed surfaces may include extents which are outwardly convex towards one another, or inwardly concave away from one another.

Conveniently each sealing member includes an annular groove housing an annular seal adapted to make sealing contact with the associated inner surface of the cylinder and outer surface of the piston.

- 5 -

Preferably the sealing members each include a surface adjacent the associated inner surface of the cylinder and outer surface of the piston inclined at a small angle, typically of the order of 2.5°, relative to said associated inner surface of the cylinder and outer surface of the piston. Said angle may be achieved either by chamferring the surfaces of the sealing members relative to the longitudinal central axis of the assembly or by chamferring the inner surface of the cylinder and the outer surface of the piston relative to the longitudinal central axis of the assembly.

It will be appreciated that the provision of such an angle between the surfaces of the sealing members and the respective surfaces of the piston and cylinder enables the piston, on substantial alignment of the annular seals in the sealing members, to pivot relative to the cylinder about the central longitudinal axis of the assembly whereby, in the application of the assembly to a bolt-tensioning device, any angular movement of the cylinder relative to the bolt being tensioned during the tensioning process can be accommodated by said relative pivoting of the piston, the direction of movement of the piston thus being maintained coaxial with the central axis of the bolt, as will be described in more detail below.

- 6 -

The piston-cylinder assembly may include a safety device which, on movement of the piston beyond a predetermined maximum stroke relative to the cylinder, is actuated to relieve fluid pressure within the assembly. Said safety device may comprise a ball valve mounted in the piston to be actuated on abutment of the piston with a washer or like element mounted at or adjacent one end of the cylinder.

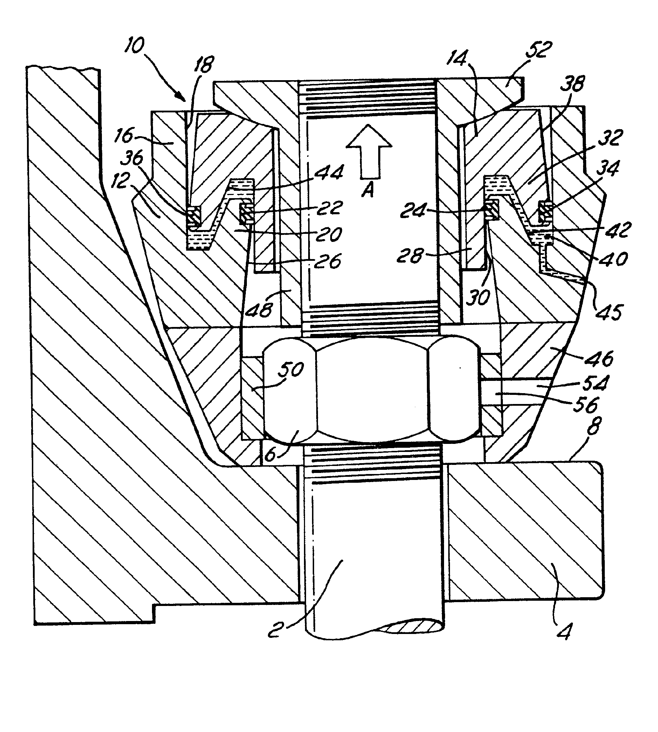

By way of example only, an embodiment of the invention will now be described in greater detail with reference to the accompanying drawing which is a vertical section through an assembly according to the invention in use as a bolt-tensioning device.

Referring to the drawing, there is illustrated an assembly according to the invention in use as a bolt-tensioning device. More particularly, the free end of a bolt to be tensioned is shown at 2, the bolt extending through components to be interconnected, one of which includes a flange 4, the connection being effected by means of an associated nut 6.

In order to ensure a tight connection, the bolt 2 is tensioned in the direction of arrow 'A' and the nut 6 is then screwed up against the surface 8 of the flange 4.

This tensioning of the bolt 2 is achieved by means of a pneumatically or hydraulically actuated piston-cylinder assembly indicated generally at 10, and comprising a cylinder 12 in which is slidably mounted, for axial movement relative thereto, a piston 14. The cylinder 12 includes a body portion 16 having an inner surface 18 and from which an annular sealing member or skirt 20 projects radially inwardly. The sealing member 20 is integrally formed with the body portion 16 and includes an annular groove 22 formed in the inner surface thereof housing an O-ring seal 24 adapted to seal against the piston 14. The remaining extent 26 of said inner surface of the sealing member 20 makes a small angle, typically of the order of 2.5°, with the central longitudinal axis of the assembly for reasons which will become apparent.

The piston 14 comprises a hollow, annular body portion 28 having an outer surface 30 extending axially of the assembly and adapted for engagement by the sealing ring 24, an annular sealing member or skirt 32 being integrally formed with said body portion 28 and projecting radially outwardly from the body portion 28. An annular groove 34 is formed in the outer surface of the sealing member 32 and houses an O-ring seal 36 adapted to seal against the surface 18 of the cylinder 10. The remaining extent 38 of said outer surface of the sealing member 32 makes the same small angle, typically 2.5°, with the central longitudinal axis of the assembly

- 8 -

as the extent 26 of the surface of the sealing member 20 but in the opposite sense.

The sealing members 20,32 so described define between them, together with the walls 18,30 of the cylinder 12 and piston 14, an annular fluid chamber 40 the opposed surfaces of which are of generally Z-shape, said opposed surfaces including planar, parallel intermediate extents 42,44 respectively extending at acute angles, typically of the order of 20° to the longitudinal axis of the assembly. A fluid inlet 45 feeds into the chamber 40.

It will be appreciated that, as fluid pressure within the chamber 40 increases (associated with an increased loading on the piston 14), the extents of the inner surface 18 of the cylinder 10 and the outer surface 30 of the piston 14 within the chamber 40 are deformed such as to increase the diameter of said extent of the cylindrical surface 18 of the cylinder 12 and to decrease the diameter of said extent of the cylindrical surface 30 of the piston 14. However, at the same time, the fluid pressure within the chamber 40 acting on the extents 42, 44 of the surfaces of the sealing members 20, 32 serves to displace said members such that the sealing member 20 is deformed radially inwardly towards the body portion 28 of the piston 14 to compensate for the deformation of the piston, and the sealing member 32 is deformed radially outwardly towards the body portion 16 of the cylinder 12 to compensate for the deformation of the cylinder. Thus the sealing rings 24,36 effectively maintain fluid-tight seals with the associated cylinder and piston, which seals in fact improve as pressure within the chamber 40 increases.

The described piston-cylinder assembly is used in conjunction with a bridge piece 46, an internally-threaded puller sleeve 48 and an insert member 50 to tension the bolt 2. More particularly the piston-cylinder assembly is located on the annular bridge piece 46 which seats on the surface 8 of the flange 4, the bolt 2 extending through the bridge piece and the hollow bore of the piston 14. The puller sleeve 48 includes an increased diameter end portion 52 such that, on screwing the sleeve 48 onto the bolt 2, the end portion 52 thereof abuts against the outer end of the piston 14. The insert member 50 has a hexagonal central bore therein adapted to embrace the nut 6, said insert member being rotatable within the bridge piece 46 by means of a tommy bar or like member that can be inserted through a slot 54 in the bridge piece and into one of a plurality of radial bores 56 in the insert member 50.

Thus, on pressurisation of the chamber 40, the piston 14 is urged upwardly in the direction of arrow 'A'

and, in turn, urges the puller sleeve 48 in said direction to tension the bolt 2. While the bolt is so tensioned, the insert member 50 is rotated by means of the tommy bar, thus rotating the nut 6 until it engages the surface 8 of the flange 4.

On release of fluid pressure within the chamber 40, and therefore on release of tension on the bolt 2, said bolt tends to return towards its non-stretched condition and, in so doing, further urges the nut 6 against the flange 4 to effect a secure connection therewith.

During the tensioning operation, the force applied to the puller sleeve 48 by the piston 14 reacts against the flange 4 by way of the cylinder 12 and bridge piece 46. The forces involved can be substantial and can be such as to cause deformation of the flange 4 whereby the cylinder 12 is itself displaced from a position in which the central longitudinal axis thereof extends parallel with that of the bolt 2. If the piston 14 were also to be so displaced, the forces applied to the bolt by the piston 14 through the puller sleeve 48 would be non-uniform.

However, the provision of the tapered surfaces 26 and 38 on the cylinder 12 and piston 14 respectively enables the piston 14 to pivot or float within the cylinder 12 to accommodate any relative displacement

- 11 -

between the axes of the cylinder 12 and the bolt 2 when the piston 14 is positioned with the O-ring seals 24,36 substantially axially aligned, as well as over a range of positions of the piston to either side of this optimum position.

In such tensioning devices it is often desirable to ensure that the stroke of the piston 14 does not exceed a predetermined maximum value. This can be achieved by incorporating a safety device in the assembly adapted for actuation on excessive movement of the piston. For example a plunger-operated ball valve may be provided in the piston 14 and located such that, on movement of the piston 14 beyond said predetermined maximum value, the plunger abuts a member fixed relative to the piston to open the ball valve and vent the chamber 40 to atmosphere.

Thus there is provided a piston-cylinder assembly including sealing means of relatively simple and inexpensive construction which are capable of withstanding substantial pressures without being prone to leakage, the sealing effect thereof increasing directly with increase in fluid pressure. The cylinder can be made relatively lightweight, while the normal clearance between the piston and the cylinder can be the same in assemblies to be used in high pressure and low pressure applications.

- 12 -

Clearly the precise construction of the sealing members 20 and 32 can be varied from that shown. For example the surfaces 42,44 may be other than planar and may be inwardly concave away from one another or outwardly convex towards one another, while said surfaces 42,44, instead of being undercut to extend upwardly and radially inwardly as viewed in the drawing, may be undercut to extend upwardly and radially outwardly.

Further, instead of, or as well as tapering the surfaces 26,38 to enable floating of the piston 14 relative to the cylinder 12, the surfaces 18 and 30 may be tapered in the appropriate directions. Other modifications and variations from the described arrangement will be apparent to those skilled in the art.

- 13 -

CLAIMS

1. A fluid-actuated piston-cylinder assembly comprising a piston (14) slidably mounted in, for axial movement relative to, a cylinder (12), the piston (14) including a sealing member (32) adapted to make sealing contact with an inner surface (18) of the cylinder (12) and the cylinder (12) including a sealing member (20) adapted to make sealing contact with an outer surface (30) of the piston (14), and an inlet (45) for a source of fluid under pressure feeding between said sealing members (32,20) on the piston (14) and cylinder (12) to move the piston (14) axially relative to the cylinder (12), characterised in that the sealing member (32) on the piston (14) projects radially outwardly of said piston (14) and the sealing member (20) on the cylinder (12) projects radially inwardly of said cylinder (12) in such a manner that, on increase in pressure of said source of fluid, the sealing members (32,20) on the piston (14) and cylinder (12) are radially deformed towards said inner surface (18) of the cylinder (12) and outer surface (30) of the piston (14) respectively to increase sealing contact therewith.

2. A piston cylinder assembly as claimed in claim 1 in which the sealing member (32) on the piston (14) is integrally formed with said piston (14) and the sealing member (20) on the cylinder (12) is integrally formed with said cylinder (12).

3. A piston-cylinder assembly as claimed in claim 1 or claim 2 in which the sealing members (20,32) include opposed surfaces (42,44) thereon defining, together with the inner surface (18) of the cylinder and the outer surface (30) of the piston, a chamber (40) into which the fluid inlet (45) feeds.

4. A piston-cylinder assembly as claimed in claim 3 in which said opposed surfaces (42,44) of the sealing members (20,32) include extents which are planar and parallel with one another and each extend at an acute angle to the central longitudinal axis of the assembly.

5. A piston-cylinder assembly as claimed in claim 3 in which said opposed surfaces (42,44) of the sealing members (20,32) are outwardly convex towards one another, or are inwardly concave away from one another.

6. A piston-cylinder assembly as claimed in any one of claims 1 to 5 in which each sealing member (20,32) includes an annular groove (22,34) housing an associated annular seal (24,36) adapted to make sealing contact with the associated inner surface (18) of the cylinder (12) and outer surface (30) of the piston (14).

7. A piston-cylinder assembly as claimed in any one of claims 1 to 6 in which the sealing members (20,32) each include a surface (26,38) adjacent the associated inner surface (18) of the cylinder (12) and

- 15 -

outer surface (30) of the piston (14) inclined at a small angle relative to said associated inner surface (18) of the cylinder (12) and outer surface (30) of the piston (14).

8.   A piston-cylinder assembly as claimed in claim 7 in which the surfaces (26,38) of the sealing members (20,32) extend at said small angle relative to the longitudinal central axis of the assembly, the inner surface (18) of the cylinder (12) and the outer surface (30) of the piston (14) extending parallel with said central axis of the assembly.

9.   A piston-cylinder assembly as claimed in any one of claims 1 to 8 and including a safety device which, on movement of the piston (14) beyond a predetermined maximum stroke relative to the cylinder (12), is actuated to relieve fluid pressure within the assembly.

10.   A piston-cylinder assembly as claimed in claim 10 in which the safety device comprises a ball valve mounted in the piston (14) to be actuated on abutment of the piston (14) with an abutment member mounted at or adjacent one end of the cylinder (12).